# FASCICULE DE BREVET EUROPEEN

(11) **EP 0 402 289 B1**
(45) Date de publication et mention de la délivrance du brevet: **26.10.1994**
(21) Numéro de dépôt: 90440049.6
(22) Date de dépôt: 06.06.1990
(51) Int. Cl.: A01C 5/06, A01C 7/08

(54) **Dispositif perfectionné d'implantation de semence dans le sol, semoir et machine combinée de préparation de lit de semence et de semis utilisant ledit dispositif**
Verbesserung an einem Säsystem, Sämaschine und kombinierte Maschine zur Saatbeeterrichtung und zum Säen mit einem solchen System
Improved seed planting device, sowing machine and combined machine for preparing a seedbeed and for sowing using the device

(30) Priorité: 06.06.1989 FR 8907630
(43) Date de publication de la demande: 12.12.1990
(73) Titulaire: KUHN S.A., F-67700 Saverne (FR)
(72) Inventeur: Kemmner Hartmut M., D-7441 Unterensingen (DE)

(56) Documents cités:
- EP-A- 0 253 998
- DE-C- 66 749
- DE-C- 346 410
- FR-A- 760 974
- FR-A- 2 388 478
- US-A- 3 319 590

## Description

La présente invention concerne un dispositif d'implantation de semence dans le sol pour équiper un semoir au châssis duquel il est destiné à être lié directement ou indirectement de manière à pouvoir se déplacer en hauteur par rapport à celui-ci, ledit dispositif d'implantation de semence dans le sol comportant au moins un élément d'implantation de semence dans le sol muni d'une structure porteuse, d'un élément rotatif guidé en rotation dans ladite structure porteuse de sorte à pouvoir tourner autour d'un axe de rotation qui s'étend transversalement à la direction d'avance au travail, ledit élément rotatif comportant un support central et au moins un groupe d'outils fixés sur ledit support central dans un plan au moins sensiblement radial, et d'une conduite de guidage et d'implantation de semence dans le sol passant devant le support central de l'élément rotatif et, durant le travail, au moins partiellement à proximité du bord latéral correspondant des outils respectifs dudit élément rotatif, chacun desdits outils comportant une partie active, dont la partie extérieure au moins s'étend, en vue suivant l'axe de rotation de l'élément rotatif et compte tenu du sens de rotation dudit élément rotatif, devant un plan contenant ledit axe de rotation et s'appuyant au moins sensiblement sur le bord extérieur dudit outil, en formant un angle avec ledit plan, ce bord extérieur dudit outil étant dirigé essentiellement transversalement à la direction d'avance au travail.

Un tel dispositif d'implantation de semence dans le sol connu (EP-A-0 253 998) comporte une structure porteuse qui supporte un élément rotatif réalisé sous forme de rouleau et des conduites de guidage et d'implantation de la semence dans le sol. Ledit rouleau est guidé en rotation dans la structure porteuse, de sorte à pouvoir tourner autour de son axe longitudinal qui s'étend au moins sensiblement perpendiculairement à la direction d'avance au travail. Il comporte un support central sur lequel sont fixés des groupes d'outils espacés le long dudit support central et dans chacun desquels les outils sont implantés suivant un plan radial. Chaque outil est réalisé sous forme de dent, dont la partie de fixation s'étend radialement par rapport au support central et dont la partie extérieure est pliée vers l'arrière compte tenu du sens de rotation. De cette sorte, chaque dent s'étend, compte tenu du sens de rotation, entièrement en avant d'un plan contenant l'axe de rotation du rouleau et s'appuyant sur son extrémité extérieure réalisée sous forme de pointe. Les conduites de guidage et d'implantation de la semence dans le sol sont, quant à elles, aménagées à des intervalles sensiblement constants suivant une rangée s'étendant au moins sensiblement parallèlement à l'axe longitudinal du rouleau. Elles sont liées chacune à la structure porteuse au moyen d'une articulation d'axe dirigé au moins sensiblement parallèlement à l'axe longitudinal du rouleau. Le pivotement vers l'arrière, autour de l'axe de leur articulation correspondante, se fait à l'encontre d'un ressort. Du reste, chaque conduite de guidage et d'implantation de la semence dans le sol passe devant le support central du rouleau et, durant le travail, au moins partiellement à proximité des bords latéraux des dents correspondantes dudit rouleau. Le contrôle de la profondeur de travail de ce dispositif d'implantation de semence dans le sol connu est assuré par un rouleau supplémentaire, du type à cage, qui supporte la structure porteuse dudit dispositif, laquelle peut pivoter par rapport audit rouleau à cage autour de l'axe longitudinal de celui-ci. L'ensemble formé par le rouleau à dents et les conduites de guidage et d'implantation de semence dans le sol peut ainsi se déplacer quelque peu en hauteur par pivotement autour de l'axe longitudinal du rouleau à cage. Ce pivotement (c'est-à-dire ce déplacement en hauteur) se fait à l'encontre d'un ressort. Ce dispositif d'implantation de semence dans le sol fait partie d'un semoir, au châssis duquel il est ainsi lié indirectement de manière à pouvoir se déplacer quelque peu en hauteur par rapport à celui-ci.

Ce dispositif d'implantation de semence dans le sol connu présente un avantage substantiel. En effet, comme chaque conduite de guidage et d'implantation de la semence dans le sol passe, durant le travail, au moins partiellement à proximité des bords latéraux des dents correspondantes du rouleau, ces dernières nettoient continuellement ladite conduite et empêchent, de ce fait, lorsque le dispositif est appelé à travailler dans un champ couvert de résidus végétaux, que ceux-ci restent accrochés à ladite conduite. De même, lesdites dents évitent également, qu'en terres collantes, il ne se forme des accumulations de terre entre deux conduites de guidage et d'implantation de la semence dans le sol adjacentes.

En pratique, dans certaines conditions, il pourrait cependant s'avérer que certains résidus végétaux, notamment les feuilles de maïs subsistant dans le champ après la récolte des grains, soient transpercés par les dents et restent ainsi accrochés à celles-ci. De même, il pourrait s'avérer que dans certains sols propices à la formation de mortes compactes, celles-ci soient également transpercées par les dents et restent collées à ces dernières.

Du reste, le contrôle de la profondeur de travail du dispositif connu ne semble pas optimal.

Dans le document DE-C-66 749 est décrit un dispositif d'implantation de semence dans le sol comportant une structure porteuse comprenant notamment une barre qui supporte des éléments rotatifs (B) et des socs (A). Le dispositif est structuré de telle sorte qu'entre deux socs (A) voisins, s'étende un élément rotatif (B). Les éléments rotatifs (B) sont montés librement rotatifs sur la barre, de sorte à pouvoir tourner autour d'un axe horizontal s'étendant perpendiculairement à la direction d'avance au travail. Chaque élément rotatif (B) comprend un support central auquel sont fixés des outils s'étendant radialement et destinés à s'enfoncer dans le sol durant le travail. Le dispositif comporte enfin encore des éléments (C) s'étendant derrière les socs(A).

Dans ce dispositif connu :
- les socs (A) sont destinés à creuser des sillons dans le sol et à guider et implanter la semence dans ces sillons;
- les éléments rotatifs (B) servant à affiner et à ameublir la zone du sol s'étendant de part et d'autre des sillons creusés par les socs (A) ; parallèlement, ils doivent également empêcher l'accumulation de terre devant les socs (A);
- les éléments (C) enfin servent à fermer les sillons creusés par les socs (A) après que la semence y ait été déposée.

Les socs traceurs de sillons (A) conjointement avec la barre portant les éléments rotatifs (B) et les organes (C) destinés à fermer les sillons constituent une unité qui est fixée au châssis d'une machine, respectivement au châssis d'un chariot, de manière réglable, de sorte à pouvoir travailler le sol à différentes profondeurs.

Dans ce dispositif connu, la profondeur de travail est certes réglable. Cependant, une fois que le réglage souhaité est effectué, le dispositif est fixe par rapport au châssis de la machine ou du chariot et le contrôle de la profondeur de travail du dispositif est réalisé par ce châssis.

Il en découle que les outils des différents éléments rotatifs de ce dispositif connu n'assurent aucune fonction de soutènement du dispositif.

Le but de la présente invention est d'obvier aux problèmes du dispositif connu (EP-A-0 253 998), c'est-à-dire d'éliminer les accrochages de débris végétaux et/ou de mottes aux outils de l'élément rotatif et d'améliorer le contrôle de la profondeur d'implantation de la semence dans le sol afin que celle-ci soit la plus constante possible, et ceci tout en conservant les avantages dudit dispositif connu.

A cet effet, le dispositif d'implantation de semence dans le sol selon l'invention est caractérisé par le fait qu'au moins la partie extérieure de la partie active de l'outil comporte un organe porteur qui est formé par une plaque, dont le bord extérieur constitue le bord extérieur de l'outil.

Grâce à cette caractéristique, chaque outil de l'élément rotatif assure également un soutènement du dispositif d'implantation de semence dans le sol lorsque son organe porteur est en contact avec le sol (la plaque que comporte l'organe porteur confère à l'outil une capacité de soutènement remarquable). Ainsi, la profondeur de travail du dispositif d'implantation de semence dans le sol est aussi contrôlée par l'élément rotatif dudit dispositif. Ce contrôle est ainsi assuré de manière optimale puisqu'il est réalisé dans le voisinage même de la zone où la conduite de guidage et d'implantation de la semence place ladite semence dans le sol.

Comme, en sus, le bord extérieur de la plaque formant l'organe porteur de chaque outil de l'élément rotatif, qui constitue le bord extérieur de l'outil, est dirigé essentiellement transversalement à la direction d'avance au travail, on évite que ledit outil ne transperce les débris végétaux et/ou les mottes de terre et n'entraîne ceux-ci lors de sa rotation.

Par ailleurs, il s'est avéré que ces outils pouvaient, dans certaines conditions, également assurer un certain recouvrement de la semence implantée dans le sol par la conduite de guidage et d'implantation de semence.

Avantageusement, l'axe de rotation de l'élément rotatif pourra s'étendre au moins sensiblement perpendiculairement à la direction d'avance au travail.

Selon une caractéristique supplémentaire de l'invention, il pourra être prévu que le bord extérieur de la plaque formant l'organe porteur de l'outil soit dirigé au moins sensiblement horizontalement et au moins sensiblement perpendiculairement à la direction d'avance au travail.

Ce bord extérieur pourra être au moins sensiblement droit.

Selon une caractéristique supplémentaire de l'invention, l'angle formé par la partie extérieure de la partie active de l'outil avec le plan contenant l'axe de rotation de l'élément rotatif et s'appuyant au moins sensiblement sur le bord extérieur de la plaque formant l'organe porteur dudit outil, pourra avoir une valeur comprise entre 15° et 45°.

Avantageusement, la partie extérieure de la partie active de l'outil pourra, en vue suivant l'axe de rotation de l'élément rotatif, être au moins sensiblement droite.

Avantageusement également, la longueur de cette partie extérieure au moins sensiblement droite pourra être sensiblement comprise entre un quart et un tiers de la longueur totale de l'outil.

Selon une caractéristique supplémentaire de l'invention, il pourra être prévu que l'outil soit formé par une lame.

Selon une autre importante caractéristique supplémentaire de l'invention, l'outil de l'élément rotatif pourra être flexible. De préférence, l'outil sera réalisé dans un matériau flexible. Grâce à cette caractéristique, l'outil sera doté d'un remarquable pouvoir de nettoyage de la conduite de guidage et d'implantation de la semence.

Dans l'invention, il pourra encore être prévu que, en vue suivant l'axe de rotation de l'élément rotatif et compte tenu du sens de rotation dudit élément rotatif, l'outil s'étende entièrement en avant du plan contenant l'axe de rotation de l'élément rotatif et s'appuyant au moins sensiblement sur son bord extérieur.

Selon une caractéristique supplémentaire de l'invention, il pourra également être prévu que la partie de fixation de l'outil s'étende au moins sensiblement tangentiellement à la trajectoire décrite par le support central de l'élément rotatif.

Avantageusement, l'outil sera fixé sur le support central de manière démontable.

Préférentiellement, le support central pourra comporter, pour chaque outil, un siège sur lequel reposera la partie de fixation dudit outil. Avantageusement, ce siège comportera, à l'endroit où ladite partie de fixation quitte celui-ci, une surface courbe qui, en vue suivant l'axe de rotation de l'élément rotatif, s'éloignera progressivement de ladite partie de fixation. Grâce à cette caractéristique, les risques de rupture de la partie de fixation de l'outil seront substantiellement diminués.

L'élément rotatif pourra remplir parfaitement sa fonction s'il comporte de deux à quatre outils par groupe, au moins sensiblement régulièrement espacés autour de son axe de rotation.

Selon une caractéristique supplémentaire de l'invention, il pourra être prévu que l'élément rotatif comporte deux groupes adjacents d'outils entre lesquels passera, durant le travail, au moins partiellement la conduite de guidage et d'implantation de la semence. L'efficacité du dispositif sera ainsi améliorée étant donné que des outils seront prévus de part et d'autre de ladite conduite.

Selon une caractéristique supplémentaire de l'invention, la structure porteuse pourra être munie de moyens permettant le réglage, dans une direction au moins sensiblement parallèle à l'axe de rotation de l'élément rotatif, de la position relative entre la conduite de guidage et d'implantation de semence dans le sol et les bords latéraux correspondants des outils respectifs de l'élément rotatif. Ceci permettra de régler exactement la distance entre la conduite de guidage et d'implantation de semence dans le sol et les outils en vue d'un nettoyage optimal de ladite conduite.

Selon une caractéristique supplémentaire de l'invention, la conduite de guidage et d'implantation de semence dans le sol pourra être liée à la structure porteuse au moyen d'un axe de liaison dirigé au moins sensiblement parallèlement à l'axe de rotation de l'élément rotatif. L'extrémité inférieure de ladite conduite pourra ainsi se déplacer en hauteur indépendamment de l'élément rotatif.

Préférentiellement, le pivotement de la partie inférieure de la conduite de guidage et d'implantation de semence dans le sol vers l'avant, autour de l'axe de liaison, sera limité par une butée.

Préférentiellement également, le pivotement de la partie inférieure de la conduite de guidage et d'implantation de semence dans le sol vers l'arrière se fera à l'encontre d'un ressort.

Lors du relevage, le ressort plaquera la conduite de guidage et d'implantation de la semence dans le sol contre la butée et évitera ainsi que ladite conduite ne vibre au transport. Ladite butée permettra ensuite de définir une position basse déterminée au-delà de laquelle le ressort ne pourra pas déplacer ladite conduite. On évitera ainsi que ladite conduite ne prenne une position telle que lors de l'abaissement du dispositif en direction du sol, elle piquerait dans le sol en provoquant l'obturation de son orifice de sortie de la semence avec de la terre. Du reste, comme le pivotement de la conduite se fera à l'encontre d'un ressort, le passage de l'élément rotatif sur un obstacle n'affectera que de manière limitée, voire pas du tout, la profondeur d'implantation de la semence, étant donné que le ressort forcera l'extrémité inférieure de la conduite à se déplacer vers le bas.

Selon une importante caractéristique supplémentaire de l'invention, la structure porteuse sera munie de moyens permettant de régler la position relative en hauteur entre l'élément rotatif et la conduite de guidage et d'implantation de la semence dans le sol. La profondeur d'implantation de la semence pourra ainsi être déterminée de manière très précise.

Selon une caractéristique supplémentaire de l'invention, le dispositif d'implantation de semence dans le sol pourra comporter plusieurs éléments d'implantation de semence dans le sol.

Une partie au moins de ces différents éléments d'implantation de semence dans le sol pourra être agencée de telle sorte que les axes de rotation des éléments rotatifs soient au moins sensiblement confondus.

Lorsque les différents éléments d'implantation de semence dans le sol s'étendent très près l'un de l'autre pour implanter des semences en rangs serrés, comme c'est le cas pour le blé, l'orge, etc., il pourra être prévu, selon une importante caractéristique supplémentaire de l'invention, qu'entre chaque paire de groupes adjacents d'outils s'étende une conduite de guidage et d'implantation de semence et que la largeur de chaque outil soit quelque peu inférieure à la distance séparant les conduites de guidage et d'implantation de la semence de deux éléments d'implantation de semence dans le sol voisins. Dans ce cas, en effet, l'un des bords latéraux desdits outils pourra participer au nettoyage de l'une desdites conduites, tandis que l'autre desdits bords latéraux pourra participer au nettoyage de l'autre desdites conduites.

Dans une réalisation préférentielle d'un tel dispositif, les éléments rotatifs d'une partie au moins des différents éléments d'implantation de semence dans le sol seront réunis en un même rouleau. Avantageusement,, il sera prévu que chaque groupe d'outils soit décalé angulairement autour de l'axe longitudinal du rouleau par rapport aux groupes d'outils adjacents. De cette sorte, les outils correspondant des différents groupes engendreront une hélice autour de l'axe longitudinal du rouleau. Le rouleau sera ainsi entraîné de manière régulière et possèdera un bon pouvoir de soutènement.

Selon une caractéristique supplémentaire, la conduite de guidage et d'implantation de semence possèdera au moins dans sa partie destinée à passer, durant le travail, à proximité des bords latéraux correspondants des outils respectifs, une largeur au moins sensiblement constante. Son nettoyage sera ainsi plus facile.

L'invention concerne également un semoir équipé d'un dispositif de stockage de la semence, d'un dispositif de dosage de la semence, d'un dispositif de distribution de la semence, d'un dispositif d'implantation de la semence dans le sol tel que décrit ci-avant et d'un dispositif de véhiculage véhiculant la semence depuis le dispositif de dosage de la semence jusqu'au dispositif d'implantation de la semence dans le sol.

L'invention concerne enfin encore une machine combinée de travail du sol et de semis comportant une machine de préparation de lit de semence et un semoir tel que décrit ci-dessus.

L'invention sera parfaitement comprise grâce à la description suivante d'un exemple non limitatif de réalisation d'un dispositif selon l'invention. Cette description fait référence au dessin annexé sur lequel :
- la figure 1 représente une vue latérale d'une machine combinée de travail du sol et de semis utilisant un dispositif d'implantation de semence dans le sol selon l'invention;
- la figure 2 représente une vue latérale du dispositif d'implantation coupé suivant le plan II-II défini sur la figure 3;
- la figure 3 représente une vue en coupe du dispositif d'implantation suivant le plan III-III défini sur la figure 2;
- la figure 4 représente une vue partielle du dispositif d'implantation coupé suivant le plan IV-IV défini sur la figure 2;
- la figure 5 représente une vue du montage du rouleau sur la structure porteuse coupé suivant le plan V défini sur la figure 2;
- la figure 6 représente une tue dudit montage suivant la flèche VI définie sur la figure 4; et
- la figure 7 représente une vue suivant l'axe longitudinal du rouleau du montage d'un outil sur le support central dudit rouleau.

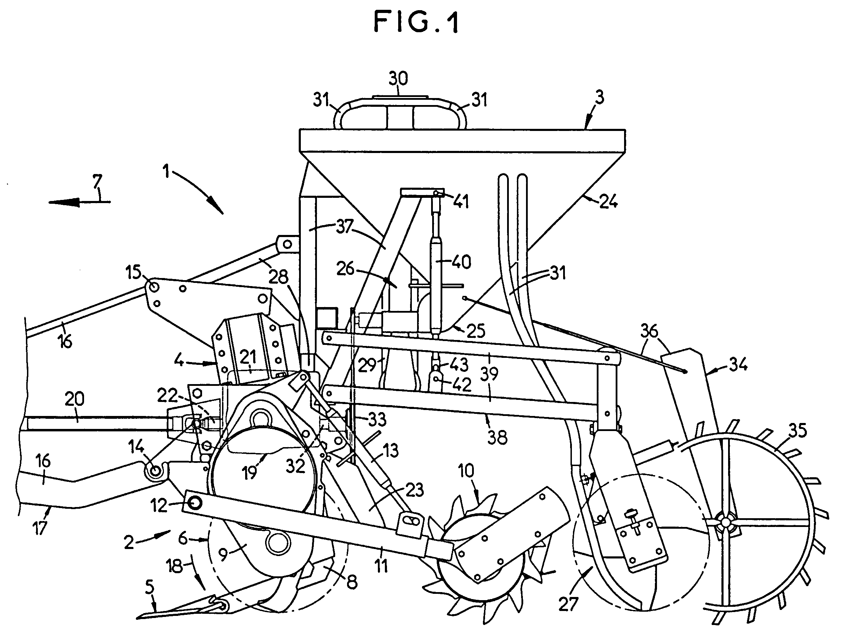

La machine combinée de travail du sol et de semis (1), représentée sur la figure 1, comprend une machine de préparation de lit de semence (2) et un semoir (3).

La machine de préparation de lit de semence comporte un châssis (4) qui supporte une rangée de socs (5) et un rotor (6). La rangée de socs (5) et l'axe longitudinal du rotor (6) s'étendent au moins sensiblement perpendiculairement à la direction d'avance (7) au travail. Chaque soc (5) est lié au châssis (4) au moyen d'un bras de soc (8), tandis que le rotor (6) est, d'une manière connue, guidé en rotation dans deux parois latérales, dont est muni le châssis (4). L'une de ces parois latérales est réalisée sous forme de carter latéral (9).

Le châssis (4) supporte également un rouleau de rappuyage (10) agencé derrière le rotor (6) et dont l'axe longitudinal s'étend au moins sensiblement parallèlement à l'axe longitudinal du rotor (6). Ce rouleau de rappuyage (10), du type "Packer" dans l'exemple représenté, est guidé en rotation entre les extrémités arrière de deux bras (11) liés à leur extrémité avant au châssis (4) au moyen d'une articulation (12) d'axe s'étendant au moins sensiblement parallèlement à l'axe longitudinal du rouleau de rappuyage (10) ou du rotor (6). Entre chacun de ces bras (11) et le châssis (4) est prévue une jambe (13) de longueur réglable. Grâce à ces deux jambes (13), il est possible de régler la hauteur du rouleau de rappuyage (10) par rapport au châssis (4). Au travail, le rouleau de rappuyage (10) roule sur le sol. De cette sorte, il détermine la profondeur de travail des socs (5) et du rotor (6). En sus, le rouleau de rappuyage (10) participe au travail du sol.

Le châssis (4) comporte par ailleurs deux points d'attelage inférieurs (14) et un point d'attelage supérieur (15) prévus pour l'accouplement de la machine combinée de travail du sol et de semis (1) à l'attelage trois points (16) d'un tracteur agricole (17), dont on n'a représenté sur la figure 1 que les bielles dudit attelage.

Le rotor (6) est entraîné en rotation autour de son axe longitudinal dans le sens défini par la flèche (18), c'est-à-dire qu'à l'avant, le rotor (6) tourne vers le bas. Cet entraînement en rotation est réalisé par des moyens d'entraînement (19), recevant eux-mêmes le mouvement de l'arbre de prise de force (non représenté) du tracteur agricole (17) au moyen d'un arbre de transmission à joints universels (20). Les moyens d'entraînement (19) sont connus de l'homme de l'art et comportent notamment un carter central (21). Le carter central (21) est un carter de renvoi qui pourra avantageusement être constitué sous forme de boîte de vitesse. Il comporte, d'une part, un arbre d'entrée (22) lié à l'arbre de transmission (20) et, d'autre part, un arbre de sortie latéral (non représenté) qui transmet le mouvement au carter latéral (9) transmettant lui-même le mouvement au rotor (6).

Le châssis (4) supporte aussi un capot qui s'étend au-dessus du rotor (6) et dont seul le volet arrière (23) est visible sur la figure 1. Ce volet arrière (23) est, d'une manière connue, réglable angulairement de sorte à influencer la trajectoire de la terre projetée vers l'arrière par le rotor (6).

Le semoir (3), quant à lui, comporte une trémie (24) dans laquelle se trouve la semence à implanter dans le lit de semence préparé par la machine de préparation de lit de semence (2). A la base de la trémie (24) est agencé un dispositif de dosage (25) de la semence. A la sortie de ce dispositif de dosage (25), la semence est transportée par un dispositif de distribution et de véhiculage (26) jusqu'à un dispositif d'implantation de la semence dans le sol (27) qui fait l'objet de la présente invention et qui sera décrit ci-après plus en détail.

Dans l'exemple représenté, le semoir (3) est porté par la machine de préparation de lit de semence (2). A cet effet, le châssis (4) de celle-ci est doté d'une structure d'attelage (28) à laquelle est attelé le semoir (3).

Ce semoir (3) est un semoir pneumatique. A cet effet, son dispositif de distribution et de véhiculage (26) comporte notamment une turbine (29), une tête de distribution (30) et des tuyaux (31). La turbine (29) crée le flux d'air qui véhicule la semence jusqu'à son implantation dans le sol. L'entraînement en rotation de la turbine (29) est réalisé à partir des moyens d'entraînement (19) de la machine de préparation de lit de semence (2). A cet effet, le carter central (21) comporte un arbre de sortie arrière (32) qui entraîne ladite turbine (29) au moyen d'un dispositif à poulies et courroie (33).

Le système d'entraînement (34) du dispositif de dosage (25) est constitué par une roue (35) roulant sur le sol et par des organes de transmission (36) transmettant le mouvement de rotation de la roue (35) au dispositif de dosage (25).

Sur la figure 1, il apparaît aussi que le dispositif d'implantation de la semence dans le sol (27) est lié au châssis (37) du semoir (3) au moyen d'une structure de liaison (38). Celle-ci comporte deux parallélogrammes (39) déformables dans un plan vertical (en fait, dans la figure 1, ces deux parallélogrammes (39) se superposent, de sorte qu'on n'en voit qu'un seul). Ladite structure (38) comporte également, entre chaque parallélogramme (39) et le châssis (37), un tirant (40) de longueur réglable. Ce tirant (40) est lié, d'une part, au châssis (37) au moyen d'une articulation (41) et, d'autre part, au parallélogramme (39) respectif au moyen d'une articulation (42). Ces articulations (41, 42) ont toutes deux un axe dirigé perpendiculairement au plan vertical dans lequel se déforme le parallélogramme (39) respectif. Au niveau de l'articulation (42), le tirant (40) est, en sus, muni d'un trou oblong (43). De cette sorte, le dispositif d'implantation de la semence dans le sol (27) pourra s'adapter à la configuration du sol dans la limite du débattement autorisé par les trous oblongs (43) des tirants (40), et ceci indépendamment de la machine de préparation de lit de semence (2). Du reste, le fait de pouvoir modifier la longueur de chaque tirant (40) permet, pour la position de travail normale du dispositif d'implantation de semence dans le sol (27), de régler la position de l'axe de l'articulation (42) dans le trou oblong (43), quelle que soit la profondeur de travail de la machine de préparation de lit de semence (2).

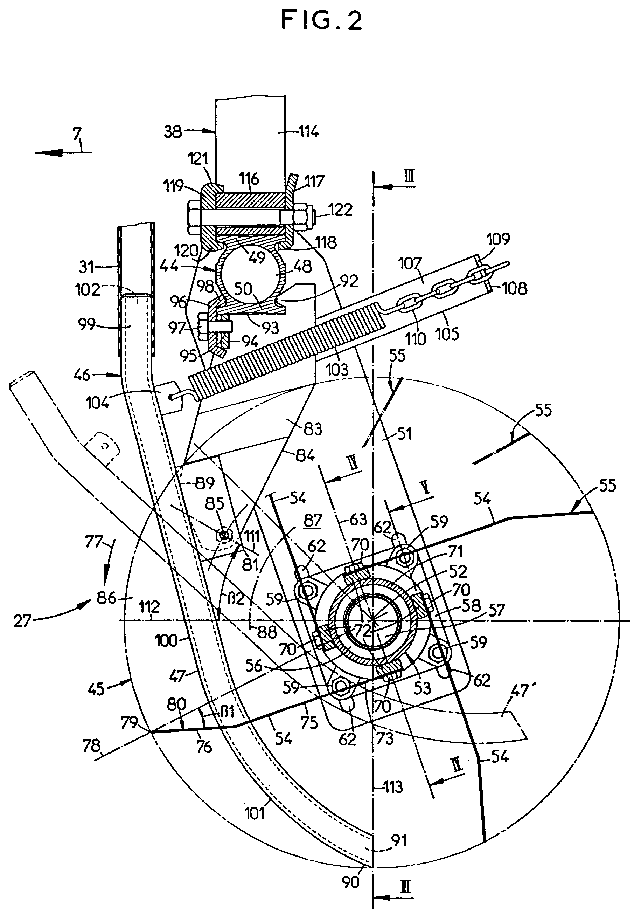

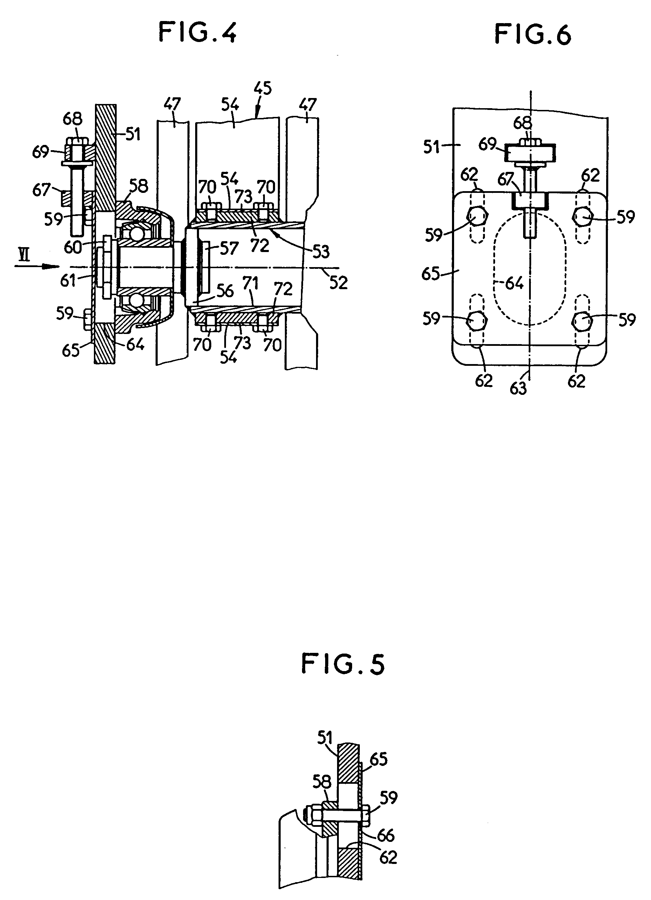

Le dispositif d'implantation de semence dans le sol (27) équipant le semoir (3) de la machine combinée de travail du sol et de semis (1) de la figure 1 apparaît en détail sur les figures 2 à 7.

Il se compose, dans les grandes lignes, d'une structure porteuse (44), d'un rouleau (45) et d'une rangée (46) de conduites de guidage et d'implantation de la semence dans le sol (47).

La structure porteuse (44) comporte, tout d'abord, une traverse tubulaire (48), dont l'axe longitudinal s'étend au moins sensiblement perpendiculairement à la direction d'avance (7) au travail. Cette traverse tubulaire (48) est munie d'une aile supérieure (49) et d'une aile inférieure (50). Ces ailes (49, 50) sont au moins sensiblement planes. Elles s'étendent horizontalement et parallèlement à l'axe longitudinal de la traverse tubulaire (48). A chacune de ses extrémités, cette traverse tubulaire (48) est, en sus, munie d'une console (51) qui s'étend vers le bas et quelque peu vers l'arrière, compte tenu du sens d'avance (7) au travail.

Entre les extrémités libres de ces consoles (51) s'étend le rouleau (45), dont l'axe longitudinal (52) est ainsi dirigé au moins sensiblement perpendiculairement à la direction d'avance (7) au travail. De cette sorte, l'axe longitudinal du rouleau (45) est au moins sensiblement parallèle à l'axe longitudinal de la traverse tubulaire (48) de la structure porteuse (44).

Le rouleau (45) se compose d'un support central (53) et d'un certain nombre de groupes (55) d'outils (54) implantes de maniére regulièrement espacée le long dudit support central (53). Dans chaque groupe (55) les outils (54) sont fixés sur le support central (53) dans un plan au moins sensiblement radial. Du reste, il apparaît également sur la figure 2, qu'un groupe (55) est décalé angulairement autour de l'axe longitudinal (52) par rapport à son ou ses groupes (55) adjacents. Dans l'exemple représenté, ce décalage est d'une trentaine de degrés. De cette sorte, les outils (54) correspondants des différents groupes (55) génèrent une hélice autour de l'axe longitudinal (52) du rouleau (45).

Le rouleau (45) est guidé en rotation dans les consoles (51), de sorte à pouvoir tourner autour de son axe longitudinal (52). A cet effet, le support central (53) est muni à chacune de ses extrémités d'un flasque (56) qui supporte un tourillon (57) centré sur l'axe longitudinal (52). Chaque tourillon (57) est guidé en rotation dans un palier à roulement (58) fixé sur la console (51) respective au moyen de quatre boulons (59) et est lié en translation à celui-ci, notamment par un écrou (60) vissé sur son extrémité filetée (61).

La fixation de chaque palier à roulement (58) à la console (51) respective est réalisée de telle manière que la position du rouleau (45) puisse être réglée en hauteur. Pour ce faire, il est prévu dans chaque console (51) quatre trous oblongs (62) dirigés au moins sensiblement parallèlement à l'axe longitudinal (63) de ladite console (51) et qui sont traversés par les quatre boulons (59) respectifs. Il est également prévu dans chaque console (51) une ouverture (64) permettant le déplacement de l'écrou (60) respectif lors du réglage de la hauteur du rouleau (45). Du côté de la face extérieure de chaque console (51) est ensuite prévue une plaque (65) qui comporte quatre trous (66) ayant un diamètre légèrement plus grand que le diamètre de la vis du boulon (59) respectif. Cette plaque (65) est par ailleurs munie d'un écrou (67) dans lequel est vissée une vis de réglage (68) qui peut tourner sans translation dans une crapaudine (69) fixée sur la console (51) respective. Ainsi, après avoir desserré quelque peu les boulons (59), il suffira de tourner les vis de réglage (68) dans le sens approprié pour obtenir la position en hauteur souhaitée du rouleau (45). En effet, comme chaque vis de réglage (68) peut tourner sans translation dans sa crapaudine (69), sa rotation provoquera le déplacement de l'écrou (67) et de la plaque (65) respectifs. Comme les trous (66) prévus dans ladite plaque (65) pour le passage des boulons (59) respectifs n'ont qu'un diamètre légèrement supérieur à celui desdits boulons (59), la plaque (65) emmènera les boulons (59) lors de son déplacement. Ce déplacement des boulons (59) est parfaitement possible puisque les trous (62) prévus dans la console (51) respective pour le passage desdits boulons (59), sont des trous oblongs. Lorsque la position en hauteur souhaitée est atteinte par le rouleau (45), il suffira de rebloquer les boulons (59).

Comme dit ci-avant, le rouleau (45) se compose d'un certain nombre d'outils (54) répartis suivant des groupes (55) régulièrement espacés le long du support central (53). Dans l'exemple de réalisation représenté, chaque groupe (55) comporte quatre outils (54).

Chaque outil (54) est fixé de manière démontable au support central (53) au moyen de deux vis (70). A cet effet, le support central (53) comporte un tube central (71), lequel est muni, pour chaque outil (54), d'un siège (72) sur lequel repose la partie de fixation (73) de l'outil (54), laquelle s'étend tangentiellement à la trajectoire décrite par le support central (53). Comme bien visible sur la figure 7, ce siège (72) comporte, à l'endroit où la partie de fixation (73) de l'outil (54) respectif quitte ledit siège (72), une surface courbe (74) qui, en vue suivant l'axe longitudinal (52) (axe de rotation) du rouleau (45), s'éloigne progressivement de ladite partie de fixation (73).

Chaque outil (54) comporte ensuite une partie active (75), dont la partie extérieure (76) est, en vue suivant l'axe longitudinal (52) du rouleau (45), droite et dirigée vers l'arrière, compte tenu du sens de rotation du rouleau (45) défini par la flèche (77). Cette partie extérieure (76), de même d'ailleurs que tout l'outil (54) s'étendent, compte tenu du sens de rotation (77) du rouleau (45), en avant d'un plan (78) contenant l'axe longitudinal (52) du rouleau (45) et s'appuyant sur le bord extérieur (79) de ladite partie extérieure (76). Dans l'exemple représenté, la partie extérieure (76) de chaque outil (54) forme avec le plan (78) un angle β1 d'une vingtaine de degrés. Du reste, dans l'exemple représenté, on voit également que la longueur de la partie extérieure (76) est environ égale au tiers de la longueur totale de l'outil (54).

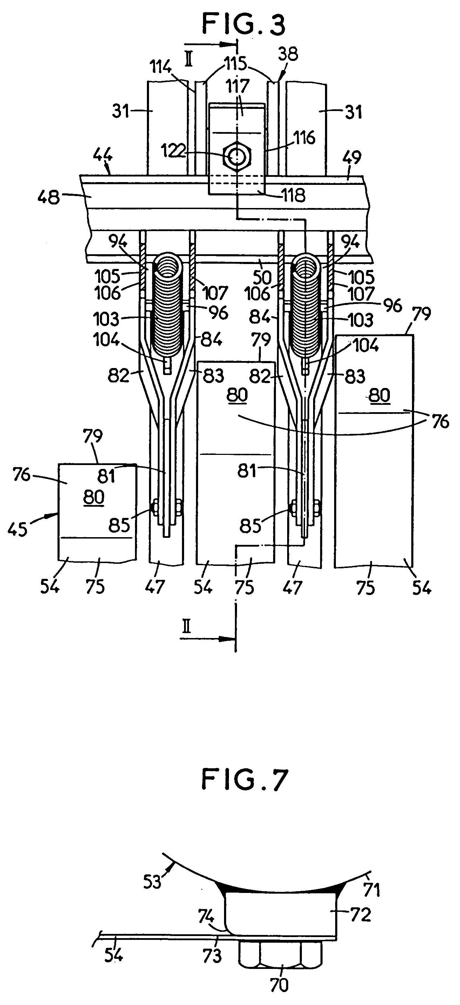

Sur la figure 3, il apparaît très précisément que chaque outil (54) est formé par une lame qui est réalisée en acier à ressort de sorte à posséder une certaine flexibilité. De cette sorte, la partie extérieure (76) comporte un organe porteur (80) qui a, en fait, une forme de plaque. C'est l'ensemble de tous les organes porteurs (80) des outils (54) en contact avec le sol, qui confère au rouleau (45) son pouvoir de soutènement.

Il apparaît aussi sur la figure 3, que le bord extérieur (79) qui est, en fait, le bord extérieur de l'organe porteur (80), est droit et est dirigé parallèlement à l'axe longitudinal (52) du rouleau (45).

Comme dit ci-avant, le dispositif d'implantation de semence dans le sol (27) selon l'invention comporte encore une rangée (46) de conduites de guidage et d'implantation de la semence dans le sol (47).

Chaque conduite de guidage et d'implantation de la semence dans le sol (47) est liée individuellement et de manière articulée à la traverse tubulaire (48) qui s'étend, en vue suivant l'axe longitudinal (52) du rouleau (45), derrière la partie supérieure desdites conduites (47) et au-dessus dudit rouleau (45).

En vue de la liaison articulée, chaque conduite de guidage et d'implantation de la semence dans le sol (47) est munie à l'arrière, compte tenu du sens de déplacement (7) au travail, d'un plat (81) dirigé au moins sensiblement perpendiculairement à l'axe longitudinal (52) du rouleau (45). Ce plat (81) s'étend entre les extrémités inférieures des deux ailes (82, 83) d'un organe support (84) réalisé sous forme de chape, auxquelles il est lié au moyen d'un axe de liaison (85). Les deux extrémités inférieures des deux ailes (82, 83) de la chape (84) s'étendent entre les deux groupes (55) d'outils (54) adjacents entre lesquels s'étend la conduite de guidage et d'implantation de la semence dans le sol (47) correspondante. Ces extrémités inférieures des deux ailes (82, 83) de la chape (84) s'étendent d'ailleurs à une distance telle entre les outils (54) correspondants du rouleau (45) que l'axe de liaison (85) s'étend, en vue suivant l'axe longitudinal (52) du rouleau (45), dans la partie extérieure (86) du secteur droit supérieur frontal (87) du rouleau (45) délimitée, du côté de l'axe de rotation (52) du rouleau (45), par la circonférence (88) de diamètre environ égal à la moitié du diamètre du rouleau (45). L'axe de liaison (85) qui s'étend ainsi derrière la conduite de guidage et d'implantation de la semence dans le sol (47), est dirigé au moins sensiblement parallèlement à l'axe longitudinal (52) du rouleau (45). Du reste, chaque aile (82, 83) de la chape (84) comporte, en sus, une face d'appui (89) contre laquelle bute la conduite de guidage et d'implantation de la semence dans le sol (47) lors de son pivotement vers l'avant. Cette butée détermine ainsi la position inférieure maximale de l'extrémité inférieure (90) de la conduite (47) où est agencé l'orifice de sortie (91) de la semence.

Alors que les deux extrémités inférieures des deux ailes (82, 83) de chaque chape (84) sont écartées l'une de l'autre d'une distance légèrement supérieure à l'épaisseur du plat (81) de la conduite de guidage et d'implantation de la semence dans le sol (47), qui s'étend entre elles, les deux extrémités supérieures desdites ailes (82, 83) sont écartées l'une de l'autre d'une distance plus importante, de sorte à obtenir une bonne liaison de la chape (84) à la traverse tubulaire (48). Cette liaison de chaque chape (84) à la traverse tubulaire (48) est réalisée au moyen d'une sorte de queue d'aronde. A cet effet, chaque aile (82, 83) de la chape (84) présente un bec (92) destiné à s'accrocher au bord arrière de l'aile inférieure (50) de la traverse tubulaire (48), et une partie (93) au moins sensiblement droite, destinée à venir en appui contre la face inférieure de ladite aile inférieure (50). A l'avant, entre les deux ailes (82, 83) de la chape (84), est soudé un plat (94) muni d'un trou fileté (95). Sur ce plat (94) est fixée une bride (96) au moyen d'une vis (97) vissée dans le trou fileté (95) dudit plat (94). Cette bride (96) est également munie d'un bec (98) destine à s'accrocher au bord avant de l'aile inférieure (50) de la traverse tubulaire (48). En vissant ainsi la vis (97), on serre l'aile inférieure (50) de la traverse tubulaire (48) entre les deux becs (92 et 98) des ailes (82, 83), respectivement de la bride (96). Cet agencement permet de régler de manière optimale la position de la conduite de guidage et d'implantation de la semence dans le sol (47) par rapport aux deux groupes (55) d'outils (54) correspondants. Il suffit en effet pour cela de débloquer la vis (97), puis de glisser l'ensemble chape (84) - conduite (47) dans le sens approprié le long de l'aile inférieure (50) de la traverse tubulaire (48), jusqu'à ce que la conduite (47) occupe la position désirée. En rebloquant la vis (97), on fixe cette position.

Chaque conduite de guidage et d'implantation de la semence dans le sol (47) s'étend devant le support central (53) du rouleau (45) et passe entre deux groupes (55) adjacents d'outils (54). Sur la figure 3, il apparaît précisément que, dans cet exemple de réalisation il est prévu une conduite de guidage et d'implantation de la semence dans le sol (47) entre chaque paire de groupes (55) adjacents d'outils (54). Il apparaît en sus que chaque conduite de guidage et d'implantation de la semence dans le soi (47) est formée par un tube rond et que, de ce fait, elle possède une largeur au moins sensiblement constante. De cette sorte, les bords latéraux de chaque outil (54) peuvent passer relativement près de la conduite de guidage et d'implantation de la semence dans le sol (47) respective. En fait, la largeur de chaque outil (54) est quelque peu inférieure à la distance séparant deux conduites de guidage et d'implantation de la semence dans le sol (47) adjacentes.

Chaque conduite de guidage et d'implantation de la semence dans le sol (47) comporte, en vue suivant l'axe longitudinal (52) du rouleau (45), une partie supérieure (99) au moins sensiblement droite et s'étendant en travail normal au moins sensiblement verticalement, une partie intermédiaire (100) également au moins sensiblement droite et s'étendant vers l'arrière et vers le bas, et une partie inférieure (101) cintrée vers l'arrière. La partie supérieure (99) comporte un orifice d'entrée (102) par où la conduite (47) est alimentée en semence par un tuyau (31) respectif branché sur ladite partie supérieure (99). La partie inférieure (101), quant à elle, comporte l'orifice de sortie (91) s'étendant au travail dans le sol et par où sort la semence.

Comme dit ci-avant, chaque conduite de guidage et d'implantation de la semence dans le sol (47) est liée individuellement à la traverse tubulaire (48) au moyen d'une chape (84) et d'un axe de liaison (85) dirigé au moins sensiblement parallèlement à l'axe longitudinal (52) du rouleau (45). De cette sorte, ladite conduite (47) peut pivoter par rapport à la structure porteuse (44) et par rapport au rouleau (45) dans un plan au moins sensiblement vertical et au moins sensiblement perpendiculaire à l'axe longitudinal (52) du rouleau (45) pour notamment se dégager du sol en cas de rencontre avec un obstacle. Ce pivotement se fait à l'encontre d'un ressort (103) qui est, dans l'exemple représenté, un ressort de traction. A cet effet, la conduite de guidage et d'implantation de la semence dans le sol (47) est munie d'une patte d'accrochage (104) s'étendant plus haut que le plat (81). Les deux ailes (82, 83) de la chape (84) sont, quant à elles, munies à l'arrière d'une pièce d'accrochage (105) ayant, en vue en plan, une forme en U. Cette pièce d'accrochage (105) est soudée à chaque extrémité libre des deux ailes (106, 107) du U à une aile (82, 83) respective de la chape (84). Dans la base (108) du U formant la pièce d'accrochage (105) est réalisée une rainure (109). Grâce à cet agencement, le ressort (103) qui s'étend plus haut que l'axe de liaison (85) et au moins sensiblement dans le même plan que la conduite (47), est accroché par l'une de ses extrémités à la patte d'accrochage (104), passe entre les extrémités supérieures des deux ailes (82, 83) de la chape (84) et sous la traverse tubulaire (48) et est accroché à l'autre de ses extrémités à la base (108) de la pièce d'accrochage (105) par l'intermédiaire d'une chaînette (110) dont l'un des maillons est introduit dans la rainure (109) pratiquée dans ladite base (108). Pour régler la force de rappel exercée par le ressort (103) sur la conduite (47) respective, il suffira d'introduire un autre maillon de la chaînette (110) dans la rainure (109).

Comme dit ci-avant, l'axe de liaison (85) s'étend dans la partie extérieure (86) du secteur droit supérieur frontal (87) du rouleau (45). Dans la réalisation représentée, ledit axe de liaison (85) se trouve sur un rayon (111) formant, avec le plan horizontal (112) passant par l'axe longitudinal (52) du rouleau (45), un angle β2 d'une trentaine de degrés, et à une distance de l'axe longitudinal (52) du rouleau (45) égale à environ un tiers de la valeur du diamètre du rouleau (45) qui est d'une cinquantaine de centimètres. Le support central (53), quant à lui, a un diamètre d'environ un cinquième du diamètre du rouleau (45). Ainsi, l'orifice de sortie (91) de la conduite (47), qui s'étend, dans la position la plus basse, sensiblement dans le plan vertical (113) passant par l'axe longitudinal (52) du rouleau (45), a un débattement vertical correct d'une dizaine de centimètres environ ((47') désigne une conduite de guidage et d'implantation de la semence dans sa position haute maximale).

La liaison du dispositif d'implantation de semence dans le sol (27) aux deux parallélogrammes (39) est réalisée de la manière suivante. Chaque parallélogramme (39) est muni à l'arrière d'un montant (114) comportant à son extrémité inférieure une fourche (115) dans laquelle est soudé un fer plat (116) destiné notamment à venir en contact avec la face supérieure de l'aile supérieure (49) de la traverse tubulaire (48). A l'arrière de la fourche (115) est soudé un mors fixe (117) qui comprend un bec (118) destiné à s'accrocher au bord arrière de l'aile supérieure (49) de la traverse tubulaire (48). A l'avant s'étend un mors amovible (119) qui présente un bec inférieur (120) et un bec supérieur (121). Le bec inférieur (120) est destiné à s'accrocher au bord avant de l'aile supérieure (49) de la traverse tubulaire (48), tandis que le bec supérieur (121) est destiné à s'accrocher au fer plat (116). Un boulon (122) enfin, traversant de part en part le mors fixe (117), le fer plat (116) et le mors amovible (119), serre l'aile supérieure (49) de la traverse tubulaire (48) entre le bec (118) du mors fixe (117) et le bec inférieur (120) du mors amovible (119).

Le dispositif d'implantation de semence dans le sol (27) qui vient d'être décrit, fonctionne de la manière suivante.

Grâce à la liaison articulée par parallélogramme (39) et au rouleau (45) dont les outils (54) sont munis à leur partie extérieure (76) d'un organe porteur (80), la profondeur d'implantation de la semence est contrôlée par le dispositif (27) lui-même. En tirant le dispositif (27) dans le sens de déplacement (7) au travail, les organes porteurs (80) des différents outils (54) viennent en contact avec le sol. Comme les outils (54) sont disposés sur le rouleau (45) suivant des hélices, l'entraînement en rotation du rouleau (45) se fait de manière régulière. On assure aussi, de ce fait, que le rouleau (45) guide parfaitement les conduites (47) étant donné qu'à chaque instant, il y a plusieurs outils (54) en contact avec le sol.

En tournant, les outils (54) passent entre les conduites de guidage et d'implantation de la semence dans le sol (47) et éloignent les débris végétaux qui arrivent en contact avec lesdites conduites (47). Parallèlement, les outils (54) empêchent également la formation d'accumulations de terre entre deux conduites (47) voisines.

Compte tenu de la forme spéciale du bord extérieur (79) de chaque outil (54), on évite que lesdits outils (54) ne transpercent notamment les débris végétaux et n'entraînent ceux-ci lors de leur rotation.

A l'arrière, lorsque les outils (54) sortent de la terre, ils emmènent une petite quantité de celle-ci qui, dans certaines conditions, va aussitôt retomber et recouvrir les sillons générés par les conduites (47) adjacentes en vue du recouvrement de la semence déposée au fond de ces sillons par lesdites conduites (47).

La profondeur d'implantation de la semence peut être réglée de manière très précise. Il suffit en effet pour cela de régler la position en hauteur du rouleau (45) par rapport à la structure porteuse (44). Ce faisant, la position relative entre les conduites (47) et le rouleau (45) est modifiée étant donné que lesdites conduites (47) ne se déplacent pas lors de ce réglage.

Lesdites conduites (47) sont individuellement liées de manière articulée à la structure porteuse (44). De ce fait, la partie inférieure (101) de chaque conduite (47) peut se déplacer en hauteur indépendamment des autres conduites (47) et du rouleau (45). Une conduite (47) peut ainsi passer par-dessus une pierre enfouie dans le sol sans que la profondeur de travail des autres conduites (47) soit modifiée. Compte tenu de la position de l'axe de liaison (85), il a été possible d'obtenir une bonne course verticale.

Du reste, comme le pivotement de chaque conduite (47) se fait à l'encontre d'un ressort (103), le passage du rouleau (45) sur un obstacle ne modifie que de manière limitée, voire pas du tout, la profondeur d'implantation de la semence dans le sol, étant donné que le ressort (103) force la partie inférieure (101) de la conduite (47) correspondante à se déplacer vers le bas.

Compte tenu de l'agencement particulier :
- de la traverse tubulaire (48) derrière la partie supérieure (99) des conduites (47) et au-dessus du rouleau (45), et
- de la chape (84), du ressort (103) et de l'axe de liaison (85) derrière la conduite (47) correspondante, on obtient un dispositif d'implantation de la semence dans le sol (27) relativement compact. De cette sorte, celui-ci peut être facilement agencé directement derrière le rouleau de rappuyage (10) de la machine de préparation de lit de semence (2).

Chaque ensemble formé par une conduite de guidage et d'implantation de semence dans le sol (47), la partie correspondante de la structure porteuse (44) et la partie correspondante du rouleau (45), constitue un élément d'implantation de semence dans le sol.

Alors que dans l'exemple décrit tous ces éléments d'implantation sont liés l'un à l'autre, on comprendra qu'il est possible, dans le cadre de l'invention, d'avoir des éléments d'implantation indépendants.

Dans l'exemple décrit, les conduites de guidage et d'implantation de semence dans le sol (47) s'étendent très près l'une de l'autre pour le semis de blé, orge, etc. On comprendra cependant que pour le semis de semence en rangs plus écartés, il est possible de réaliser un dispositif (27) dont les différentes conduites (47) soient plus écartées l'une de l'autre.

Mais il est également parfaitement possible de semer des rangs écartés avec un dispositif (27) prévu pour le semis en rangs serrés. Il suffit en effet pour cela de supprimer l'alimentation de certaines conduites (47). Il est, du reste, possible de démonter les conduites (47) non alimentées.

Dans le cadre de l'invention, la machine de préparation de lit de semence (2) et le semoir (3) pourront être différents de ceux décrits.

Enfin, il est parfaitement possible que le dispositif d'implantation de semence dans le sol (27) équipe un semoir (3) utilisé en solo.

Différentes modifications restent possibles sans qu'on sorte pour autant du cadre de la présente invention, tel que défini dans les revendications suivantes.

## Revendications

1. Dispositif d'implantation de semence dans le sol (27) pour équiper un semoir (3) au châssis (37) duquel il est destiné à être lié directement ou indirectement de manière à pouvoir se déplacer en hauteur par rapport à celui-ci, ledit dispositif d'implantation de semence dans le sol (27) comportant au moins un élément d'implantation de semence dans le sol muni d'une structure porteuse (44), d'un élément rotatif (45) guidé en rotation dans ladite structure porteuse (44) de sorte à pouvoir tourner autour d'un axe de rotation (52) qui s'étend transversalement à la direction d'avance (7) au travail, ledit élément rotatif (45) comportant un support central (53) et au moins un groupe (55) d'outils (54) fixés sur ledit support central (53) dans un plan au moins sensiblement radial, et d'une conduite de guidage et d'implantation de semence dans le sol (47) passant devant le support central (53) de l'élément rotatif (45) et, durant le travail, au moins partiellement à proximité du bord latéral correspondant des outils (54) respectifs dudit élément rotatif (45), chacun desdits outils (54) comportant une partie active (75), dont la partie extérieure (76) au moins s'étend, en vue suivant l'axe de rotation (52) de l'élément rotatif (45) et compte tenu du sens de rotation (77) dudit élément rotatif (45), devant un plan (78) contenant ledit axe de rotation (52) et s'appuyant au moins sensiblement sur le bord extérieur (79) dudit outil (54), en formant un angle β1 avec ledit plan (78), ce bord extérieur (79) dudit outil (54) étant dirigé essentiellement transversalement à la direction d'avance (7) au travail, caractérisé par le fait qu'au moins la partie extérieure (76) de la partie active (75) de l'outil (54) comporte un organe porteur (80) qui est formé par une plaque dont le bord extérieur (79) constitue le bord extérieur (79) de l'outil (54).

2. Dispositif d'implantation de semence dans le sol selon la revendication 1, caractérisé par le fait que l'axe de rotation (52) de l'élément rotatif (45) s'étend au moins sensiblement perpendiculairement à la direction d'avance (7) au travail.

3. Dispositif d'implantation de semence dans le sol selon la revendication 1 ou 2, caractérisé par le fait que le bord extérieur (79) de la plaque formant l'organe porteur (80) de l'outil (54) est dirigé au moins sensiblement horizontalement et au moins sensiblement perpendiculairement à la direction d'avance (7) au travail.

4. Dispositif d'implantation de semence dans le sol selon l'une au moins des revendications 1 à 3, caractérisé par le fait que le bord extérieur (79) de la plaque formant l'organe porteur (80) de l'outil (54) est au moins sensiblement droit.

5. Dispositif d'implantation de semence dans le sol selon l'une au moins des revendications 1 à 4, caractérisé par le fait que l'angle β1 formé par la partie extérieure (76) de la partie active (75) de l'outil (54) avec le plan (78) contenant l'axe de rotation (52) de l'élément rotatif (45) et s'appuyant au moins sensiblement sur le bord extérieur (79) de la plaque formant l'organe porteur (80) dudit outil (54), a une valeur comprise entre 15° et 45°.

6. Dispositif d'implantation de semence dans le sol selon l'une au moins des revendications 1 à 5, caractérisé par le fait qu'en vue suivant l'axe de rotation (52) de l'élément rotatif (45), la partie extérieure (76) de la partie active (75) de l'outil (54) est au moins sensiblement droite.

7. Dispositif d'implantation de semence dans le sol selon la revendication 6, caractérisé par le fait que ladite partie extérieure (76) au moins sensiblement droite a une longueur sensiblement comprise entre un quart et un tiers de la longueur totale de l'outil (54).

8. Dispositif d'implantation de semence dans le sol selon l'une au moins des revendications 1 à 7, caractérisé par le fait que l'outil (54) est formé par une lame.

9. Dispositif d'implantation de semence dans le sol selon l'une au moins des revendications 1 à 8, caractérisé par le fait que l'outil (54) de l'élément rotatif (45) est flexible.

10. Dispositif d'implantation de semence dans le sol selon la revendication 9, caractérisé par le fait que ledit outil (54) est réalisé dans un matériau flexible.

11. Dispositif d'implantation de semence dans le sol selon la revendication 10, caractérisé par le fait que ledit outil (54) est en acier à ressort.

12. Dispositif d'implantation de semence dans le sol selon l'une au moins des revendication 1 à 11, caractérisé par le fait que, en vue suivant l'axe de rotation (52) de l'élément rotatif (45) et compte tenu du sens de rotation (77) dudit élément rotatif (45), l'outil (54) s'étend entièrement en avant du plan (78) contenant ledit axe de rotation (52) et s'appuyant au moins sensiblement sur son bord extérieur (79).

13. Dispositif d'implantation de semence dans le sol selon l'une au moins des revendications 1 à 12, caractérisé par le fait que la partie de fixation (73) de l'outil (54) s'étend au moins sensiblement tangentiellement à la trajectoire décrite par le support central (53) de l'élément rotatif (45).

14. Dispositif d'implantation de semence dans le sol selon l'une au moins des revendications 1 à 13, caractérisé par le fait que l'outil (54) est fixé de manière démontable sur le support central (53) de l'élément rotatif (45).

15. Dispositif d'implantation de semence dans le sol selon l'une au moins des revendications 1 à 14, caractérisé par le fait que pour chaque outil (54), le support central (53) de l'élément rotatif (45) comporte un siège (72) sur lequel repose la partie de fixation (73) dudit outil (54) et qu'à l'endroit où ladite partie de fixation (73) quitte ledit siège (72), celui-ci comporte une surface courbe (74) qui, en vue suivant l'axe de rotation (52) dudit élément rotatif (45), s'éloigne progressivement de ladite partie de fixation (73).

16. Dispositif d'implantation de semence dans le sol selon l'une au moins des revendications 1 à 15, caractérisé par le fait que l'élément rotatif (45) comporte de deux à quatre outils (54) par groupe (55), au moins sensiblement régulièrement espacés autour de l'axe de rotation (52) dudit élément rotatif (45).

17. Dispositif d'implantation de semence dans le sol selon l'une au moins des revendications 1 à 16, caractérisé par le fait que l'élément rotatif (45) comporte deux groupes (55) adjacents d'outils (54) entre lesquels passe, durant le travail, au moins partiellement la conduite de guidage et d'implantation de la semence dans le sol (47).

18. Dispositif d'implantation de semence dans le sol selon l'une au moins des revendications 1 à 17, caractérisé par le fait que la structure porteuse (44) est munie de moyens (48, 50, 82, 83, 84, 92, 93, 94, 95, 96, 97, 98) permettant le réglage, dans une direction au moins sensiblement parallèle à l'axe de rotation (52) de l'élément rotatif (45), de la position relative entre la conduite de guidage et d'implantation de la semence dans le sol (47) et les bords latéraux correspondants des outils (54) respectifs de l'élément rotatif (45).

19. Dispositif d'implantation de semence dans le sol selon l'une au moins des revendications 1 à 18, caractérisé par le fait que la conduite de guidage et d'implantation de semence dans le sol (47) est liée à la structure porteuse (44) au moyen d'un axe de liaison (85) dirigé au moins sensiblement parallèlement à l'axe de rotation (52) de l'élément rotatif (45).

20. Dispositif d'implantation de semence dans le sol selon la revendication 19, caractérisé par le fait que le pivotement de la partie inférieure (101) de la conduite de guidage et d'implantation de semence dans le sol (47) vers l'avant, autour de l'axe de liaison (85), est limité par une butée (89).

21. Dispositif d'implantation de semence dans le sol selon la revendication 19 ou 20, caractérisé par le fait que le pivotement de la partie inférieure (101) de la conduite de guidage et d'implantation de semence dans le sol (47) vers l'arrière se fait à l'encontre d'un ressort (103).

22. Dispositif d'implantation de semence dans le sol selon l'une au moins des revendications 1 à 21, caractérisé par le fait que la structure porteuse (44) est munie de moyens (51, 59, 62, 64, 65, 66, 67, 68, 69) permettant de régler la position relative en hauteur entre l'élément rotatif (45) et la conduite de guidage et d'implantation de la semence dans le sol (47).

23. Dispositif d'implantation de semence dans le sol selon l'une au moins des revendications 1 à 22, caractérisé par le fait qu'il comporte plusieurs éléments d'implantation de semence dans le sol.

24. Dispositif d'implantation de semence dans le sol selon la revendication 23, caractérisé par le fait qu'une partie au moins desdits éléments d'implantation de semence dans le sol est agencée de telle sorte que les axes de rotation (52) des éléments rotatifs (45) soient au moins sensiblement confondus.

25. Dispositif d'implantation de semence dans le sol selon la revendication 24, caractérisé par le fait qu'entre chaque paire de groupes (55) adjacents d'outils (54) est prévue une conduite de guidage et d'implantation de semence dans le sol (47), et que la largeur de chaque outil (54) est quelque peu inférieure à la distance séparant les conduites de guidage et d'implantation de semence dans le sol (47) de deux éléments d'implantation de semence dans le sol voisins.

26. Dispositif d'implantation de semence dans le sol selon la revendication 24 ou 25, caractérisé par le fait que les éléments rotatifs (45) d'une partie au moins des différents éléments d'implantation de semence dans le sol sont réunis en un même rouleau (45).

27. Dispositif d'implantation de semence dans le sol selon la revendication 26, caractérisé par le fait que chaque groupe (55) d'outils (54) est décalé angulairement autour de l'axe longitudinal (52) du rouleau (45) par rapport aux groupes (55) d'outils (54) adjacents.

28. Dispositif d'implantation de semence dans le sol selon l'une au moins des revendications 1 à 27, caractérisé par le fait que la conduite de guidage et d'implantation de semence dans le sol (47) possède au moins dans sa partie destinée à passer, durant le travail, à proximité des bords latéraux correspondants des outils (54) respectifs, une largeur au moins sensiblement constante.

29. Semoir (3) comportant un dispositif de stockage (24) de la semence, un dispositif de dosage de la semence (25), un dispositif de distribution de la semence (26), un dispositif d'implantation de la semence dans le sol (27) et un dispositif de véhiculage (26) véhiculant la semence depuis le dispositif de dosage de la semence (25) jusqu'au dispositif d'implantation de la semence dans le sol (27), caractérisé par le fait que ledit dispositif d'implantation de semence dans le sol (27) est un dispositif selon l'une au moins des revendications 1 à 28.

30. Machine combinée de travail du sol et de semis (1) comportant une machine agricole de préparation d'un lit de semence (2) et un semoir (3), caractérisée par le fait qu'elle utilise un semoir (3) selon la revendication 29.

## Claims

1. A device for planting seed in the soil (27) to equip a sowing machine (3) to the flame (37) of which it is intended to be connected directly or indirectly so as to be able to move in height in relation to the latter, the said device for planting seed in the soil (27) comprising at least one element for planting seed in the soil equipped with a carrying structure (44), with a rotary element (45) guided in rotation in the said carrying structure (44) in such a way as to be able to rotate about an axis of rotation (52) which extends transversely to the direction of advance (7) during work, the said rotary element (45) comprising a central support (53) and at least one group (55) of tools (54) fixed onto the said central support (53) in a at least approximately radial plane, and with a pipe for guiding and planting the seed in the soil (47) passing in front of the central support (53) of the rotary element (45) and, during work, at least partially in the vicinity of the corresponding lateral edge of the respective tools (54) of the said rotary element (45), each of the said tools (54) having an active part (75), of which the outer part (76) at least extends, when seen along the axis of rotation (52) of the rotary element (45) and taking account of the direction of rotation (77) of the said rotary element (45), in front of a plane (78) containing the said axis of rotation (52) and supporting itself at least approximately on the outer edge (79) of the said tool (54), forming a angle β1 with the said plane (78), this outer edge (79) of the said tool (54) being directed essentially transversely to the direction of advance (7) during work, characterised by the fact that at least the outer part (76) of the active part (75) of the tool (54) has a carrying element (80) which is formed by a plate of which the outer edge (79) constitutes the outer edge (79) of the tool (54).

2. A device for planting seed in the soil in accordance with claim 1, characterised by the fact that the axis of rotation (52) of the rotary element (45) extends at least approximately perpendicularly to the direction of advance (7) during work.

3. A device for planting seed in the soil in accordance with claim 1 or 2, characterised by the fact that the outer edge (79) of the plate forming the carrying element (80) of the tool (54) is directed at least approximately horizontally and at least approximately perpendicularly to the direction of advance (7) during work.

4. A device for planting seed in the soil in accordance with at least one of claims 1 to 3, characterised by the fact that the outer edge (79) of the plate forming the carrying element (80) of the tool (54) is at least approximately straight.

5. A device for planting seed in the soil in accordance with at least one of claims 1 to 4, characterised by the fact that the angle β1 formed by the outer part (76) of the active part (75) of the tool (54) with the plane (78) containing the axis of rotation (52) of the rotary element (45) and supporting itself at least approximately on the outer edge (79) of the plate forming the carrying element (80) of the said tool (54), has a value of between 15° and 45°.

6. A device for planting seed in the soil in accordance with at least one of claims 1 to 5, characterised by the fact that when seen along the axis of rotation (52) of the rotary element (45), the outer part (76) of the active part (75) of the tool (54) is at least approximately straight.

7. A device for planting seed in the soil in accordance with claim 6, characterised by the fact that the said at least approximately straight outer part (76) has a length which is approximately between one quarter and one third of the total length of the tool (54).

8. A device for plating seed in the soil in accordance with at least one of claims 1 to 7, characterised by the fact that the tool (54) is made up by a blade.

9. A device for planting seed in the soil in accordance with at least one of claims 1 to 8, characterised by the fact that the tool (54) of the rotary element (45) is flexible.

10. A device for planting seed in the soil in accordance with claim 9, characterised by the fact that the said tool (54) is made in a flexible material.

11. A device for planting seed in the soil in accordance with claim 10, characterised by the fact that the said tool (54) is in spring steel.

12. A device for planting seed in the soil in accordance with at least one of claims 1 to 11, characterised by the fact that, when seen along the axis of rotation (52) of the rotary element (45) and taking account of the direction of rotation (77) of the said rotary element (45), the tool (54) extends entirely in front of the plane (78) containing the said axis of rotation (52) and supporting itself at least approximately on its outer edge (79).

13. A device for planting seed in the soil in accordance with at least one of claims 1 to 12, characterised by the fact that the fixing part (73) of the tool (54) extends at least approximately tangentially to the trajectory described by the central support (53) of the rotary element (45).

14. A device for planting seed in the soil in accordance with at least one of claims 1 to 13, characterised by the fact that the tool (54) is fixed in a removable manner onto the central support (53) of the rotary element (45).

15. A device for planting seed in the soil in accordance with at least one of claims 1 to 14, characterised by the fact that for each tool (54), the central support (53) of the rotary element (45) has a seat (72) on which rests the fixing part (73) of the said tool (54) and in that at the place where the said fixing part (73) leaves the said seat (72), the latter has a curved surface (74) which, when seen along the axis of rotation (52) of the said rotary element (45), moves progressively further from the said fixing part (73).

16. A device for planting seed in the soil in accordance with at least one of claims 1 to 15, characterised by the fact that the rotary element (45) has from two to four tools (54) per group (55), spaced at least approximately regularly about the axis of rotation (52) of the said rotary element (45).

17. A device for planting seed in the soil in accordance with at least one of claims 1 to 16, characterised by the fact that the rotary element (45) has two adjacent groups (55) of tools (54) between which passes at least partially, during work, the pipe for guiding and planting the seed in the soil (47).

18. A device for planting seed in the soil in accordance with at least one of claims 1 to 17, characterised by the fact that the carrying structure (44) is equipped with means (48, 50, 82, 83, 84, 92, 93, 94, 95, 96, 97, 98) which permit the regulating, in a direction at least approximately parallel to the axis of rotation (52) of the rotary element (45), of the relative position between the pipe for guiding and planting the seed in the soil (47) and the corresponding lateral edges of the respective tools (54) of the rotary element (45).

19. A device for planting seed in the soil in accordance with at least one of claims 1 to 18, characterised by the fact that the pipe for guiding ad planting the seed in the soil (47) is connected to the carrying structure (44) by means of a connecting axis (85) directed at least approximately parallel to the axis of rotation (52) of the rotary element (45).

20. A device for planting seed in the soil in accordance with claim 19, characterised by the fact that forward pivoting of the lower part (101) of the pipe for guiding and planting the seed in the soil (47) about the connecting axis (85) is limited by a stop (89).

21. A device for planting seed in the soil in accordance with claim 19 or 20, characterised by the fact that backward pivoting of the lower part (101) of the pipe for guiding and planting the seed in the soil (47) is done against a spring (103).

22. A device for planting seed in the soil in accordance with at least one of claims 1 to 21, characterised by the fact that the carrying structure (44) is equipped with means (51, 59, 62, 64, 65, 66, 67, 68, 69) which permit the regulating of the relative position in height between the rotary element (45) and the pipe for guiding and planting the seed in the soil (47).

23. A device for planting seed in the soil in accordance with at least one of claims 1 to 22, characterised by the fact that it has several elements for planting the seed in the soil.

24. A device for planting seed in the soil in accordance with claim 23, characterised by the fact that one part at least of the said elements for planting the seed in the soil is arranged in such a way that the axes of rotation (52) of the rotary elements (45) are at least approximately coincident.

25. A device for planting seed in the soil in accordance with claim 24, characterised by the fact that between each pair of adjacent groups (55) of tools (54) is foreseen a pipe for guiding and plating the seed in the soil (47), and in that the width of each tool (54) is slightly less than the distance separating the pipes for guiding and planting the seed in the soil (47) of two neighbouring elements for planting the seed in the soil.

26. A device for planting seed in the soil in accordance with claim 24 or 25, characterised by the fact that the rotary elements (45) of a part at least of the different elements for plating the seed in the soil are joined on a single roller (45).

27. A device for planting seed in the soil in accordance with claim 26, characterised by the fact that each group (55) of tools (54) is offset at an angle about the longitudinal axis (52) of the roller (45) in relation to the adjacent groups (55) of tools (54).

28. A device for planting seed in the soil in accordance with at least one of claims 1 to 27, characterised by the fact that the pipe for guiding and planting the seed in the soil (47) has, at least in that part of it intended to pass during work close to the corresponding lateral edges of the respective tools (54), an at least approximately constant width.

29. A sowing machine (3) having a device (24) for storing the seed, a device (25) for dosing the seed, a device (26) for distributing the seed, a device (27) for planting the seed in the soil and a device (26) for conveying the seed from the device (25) for dosing the seed to the device (27) for planting the seed in the soil, characterised by the fact that the said device (27) for planting the seed in the soil is a device in accordance with at least one of claims 1 to 28.

30. A combined machine for working the soil and sowing (1) comprising an agricultural machine for preparing a seed bed (2) and a sowing machine (3), characterised by the fact that it uses a sowing machine (3) in accordance with claim 29.

## Patentansprüche

1. Vorrichtung zur Einführung von Saatgut in den Boden (27) zur Ausrüstung einer Sämaschine (3) mit dessen Rahmen (37) sie direkt oder indirekt derart verbindbar ist, dass sie in bezug auf diesen höhenverstellbar ist, welche Vorrichtung zur Einführung von Saatgut in den Boden (27) mindestens ein Element zur Einführung von Saatgut in den Boden aufweist, das mit einem Tragwerk (44), einem Rotationselement (45), das drehbar im Tragwerk (44) derart geführt ist, dass es um eine Rotationsachse (52) drehen kann, die sich quer zur Arbeitsvorschubrichtung (7) erstreckt, welches Rotationselement (45) eine zentrale Halterung (53) und mindestens eine Gruppe (55) von Werkzeugen (54) aufweist, die der zentralen Halterung (53) in einer zumindest im wesentlichen radialen Ebene befestigt sind, und mit einer Leitung zum Transport und zur Einführung von Saatgut in den Boden (47) versehen ist, das vor der zentralen Halterung (53) des Rotationselements (45) und während der Arbeit zumindest teilweise in der Nähe des entsprechenden Seitenrandes der betreffenden Werkzeuge (54) des Rotationselements (45) verläuft, wobei jedes Werkzeug (54) einen wirksamen Teil (75) aufweist, dessen äusserer Teil (76) sich zumindest, in Richtung der Rotationsachse (52) des Rotationselements (45) gesehen und hinsichtlich des Drehsinns (77) des Rotationselements (45), vor einer Ebene (78) erstreckt, die die Rotationsachse (52) enthält und die zumindest im wesentlichen am Aussenrand (79) des Werkzeugs (54) anliegt, unter Bildung eines Winkels β1 mit der Ebene (78), wobei der Aussenrand (79) des Werkzeugs (54) im wesentlichen quer zur Arbeitsvorschubrichtung (7) ausgerichtet ist, dadurch gekennzeichnet, dass zumindest der äussere Teil (76) des wirksamen Teils (75) des Werkzeugs (54) ein Tragorgan (80) aufweist, das durch eine Platte gebildet ist, deren Aussenrand (79) den Aussenrand (79) des Werkzeugs (54) bildet.

2. Vorrichtung zur Einführung von Saatgut in den Boden nach Anspruch 1, dadurch gekennzeichnet, dass die Rotationsachse (52) des Rotationselements (45) sich zumindest im wesentlichen senkrecht zur Arbeitsvorschubrichtung (7) erstreckt.

3. Vorrichtung zur Einführung von Saatgut in den Boden nach Anspruch 1 oder 2, dadurch gekennzeichnet, dass der Aussenrand (79), der das Tragorgan (80) des Werkzeugs (54) bildenden Platte zumindest im wesentlichen horizontal und zumindest im wesentlichen senkrecht zur Arbeitsvorschubrichtung (7) ausgerichtet ist.

4. Vorrichtung zur Einführung von Saatgut in den Boden nach mindestens einem der Ansprüche 1 bis 3, dadurch gekennzeichnet, dass der Aussenrand (79) der das Tragorgan (80) des Werkzeugs (54) bildenden Platte zumindest im wesentlichen gerade ist.

5. Vorrichtung zur Einführung von Saatgut in den Boden nach mindestens einem der Ansprüche 1 bis 4, dadurch gekennzeichnet, dass der Winkel β1, der durch den äusseren Teil (76) des wirksamen Teils (75) des Werkzeugs (54) mit der Ebene (78) gebildet wird, die die Rotationsachse (52) des Rotationselements (45) enthält und die zumindest im wesentlichen am Aussenrand (79) der das Tragorgan (80) des Werkzeugs (54) bildenden Platte anliegt, einen Wert zwischen 15° und 45° hat.

6. Vorrichtung zur Einführung von Saatgut in den Boden nach mindestens einem der Ansprüche 1 bis 5, dadurch gekennzeichnet, dass, in Richtung der Rotationsachse (52) des Rotationselements (45) gesehen, der äussere Teil (76) des wirksamen Teils (75) gesehen, der äussere Teil (76) des wirksamen Teils (75) des Werkszeugs (54) zumindest im wesentlichen gerade ist.

7. Vorrichtung zur Einführung von Saatgut in den Boden nach Anspruch 6, dadurch gekennzeichnet, dass der zumindest im wesentlichen gerade äussere Teil (76) eine Länge hat, die im wesentlichen zwischen einem Viertel und einem Drittel der Gesamtlänge des Werkzeugs (54) beträgt.

8. Vorrichtung zur Einführung von Saatgut in den Boden nach mindestens einem der Ansprüche 1 bis 7, dadurch gekennzeichnet, dass das Werkzeug (54) durch ein Blatt gebildet ist.

9. Vorrichtung zur Einführung von Saatgut in den Boden nach mindestens einem der Ansprüche 1 bis 8, dadurch gekennzeichnet, dass das Werkzeug (54) des Rotationselements (45) biegsam ist.

10. Vorrichtung zur Einführung von Saatgut in den Boden nach Anspruch 9, dadurch gekennzeichnet, dass das Werkzeug (54) aus einem biegsamen Material hergestellt ist.

11. Vorrichtung zur Einführung von Saatgut in den Boden nach Anspruch 10, dadurch gekennzeichnet, dass das Werkzeug (54) aus Federstahl ist.

12. Vorrichtung zur Einführung von Saatgut in den Boden nach mindestens einem der Ansprüche 1 bis 11, dadurch gekennzeichnet, dass das Werkzeug (54), in Richtung der Rotationsachse (52) des Rotationselements (45) gesehen und hinsichtlich des Drehsinns (77) des Rotationselements (45), sich ganz vor der Ebene (78) erstreckt, die die Rotationsachse (52) enthält und die zumindest im wesentlichen an seinem Aussenrand (79) anliegt.

13. Vorrichtung zur Einführung von Saatgut in den Boden nach mindestens einem der Ansprüche 1 bis 12, dadurch gekennzeichnet, dass sich der Befestigungsteil (73) des Werkzeugs (54) zumindest im wesentlichen tangential zur durch die zentrale Halterung (53) des Rotationselements (45) beschriebenen Bahn erstreckt.

14. Vorrichtung zur Einführung von Saatgut in den Boden nach mindestens einem der Ansprüche 1 bis 13, dadurch gekennzeichnet, dass das Werkzeug (54) abnehmbar an der zentralen Halterung (53) des Rotationselements (45) befestigt ist.

15. Vorrichtung zur Einführung von Saatgut in den Boden nach mindestens einem der Ansprüche 1 bis 14, dadurch gekennzeichnet, dass für jedes Werkzeug (54) die zentrale Halterung (53) des Rotationselements (45) einen Sitz (72) aufweist, auf dem der Befestigungsteil (73) des Werkzeugs (54) aufruht, und dass an der Stelle, wo der Befestigungsteil (73) den Sitz (72) verlässt, dieser eine gekrümmte Fläche (74) aufweist, die sich, in Richtung der Rotationsachse (52) des Rotationselements (45) gesehen, vom Befestigungsteil (73) allmählich entfernt.

16. Vorrichtung zur Einführung von Saatgut in den Boden nach mindestens einem der Ansprüche 1 bis 15, dadurch gekennzeichnet, dass das Rotationselement (45) zwei bis vier Werkzeuge (54) pro Gruppe (55) aufweist, die zumindest im wesentlichen in regelmässigen Abständen um die Rotationsachse (52) des Rotationselements (45) angeordnet sind.

17. Vorrichtung zur Einführung von Saatgut in den Boden nach mindestens einem der Ansprüche 1 bis 16, dadurch gekennzeichnet, dass das Rotationselement (45) zwei benachbarte Gruppen (55) von Werkzeugen (54) aufweist, zwischen welchen, während der Arbeit, zumindest teilweise die Leitung zum Transport und zur Einführung von Saatgut in den Boden (47) verläuft.

18. Vorrichtung zur Einführung von Saatgut in den Boden nach mindestens einem der Ansprüche 1 bis 17, dadurch gekennzeichnet, dass das Tragwerk (44) mit Mitteln (48, 50, 82, 83, 84, 92, 93, 94, 95, 96, 97, 98) versehen ist, die die Einstellung in einer zumindest im wesentlichen zur Rotationsachse (52) des Rotationselements (45) parallelen Richtung der Relativlage zwischen der Leitung zum Transport und zur Einführung von Saatgut in den Boden (47) und den entsprechenden Seitenrändern der betreffenden Werkzeuge (54) des Rotationselements (45) ermöglichen.

19. Vorrichtung zur Einführung von Saatgut in den Boden nach mindestens einem der Ansprüche 1 bis 18, dadurch gekennzeichnet, dass die Leitung zum Transport und zur Einführung von Saatgut in den Boden (47) mit dem Tragwerk (44) mittels einer Verbindungsachse (85) verbunden ist, die zumindest im wesentlichen parallel zu Rotationsachse (52) des Rotationselements (45) ausgerichtet ist.

20. Vorrichtung zur Einführung von Saatgut in den Boden nach Anspruch 19, dadurch gekennzeichnet, dass die Schwenkung des unteren Teils (101) der Leitung zum Transport und zur Einführung von Saatgut in den Boden (47) nach vorne um die Verbindungsachse (85) durch einen Anschlag (89) begrenzt ist.

21. Vorrichtung zur Einführung von Saatgut in den Boden nach Anspruch 19 oder 20, dadurch gekennzeichnet, dass die Schwenkung des unteren Teils (101) der Leitung zum Transport und zur Einführung von Saatgut in den Boden (47) nach hinten entgegen die Wirkung einer Feder (103) erfolgt.

22. Vorrichtung zur Einführung von Saatgut in den Boden nach mindestens einem der Ansprüche 1 bis 21, dadurch gezennzeichnet, dass das Tragwerk (44) mit Mitteln (51, 59, 62, 64, 65, 66, 67, 68, 69) versehen ist, die die Einstellung der relativen Höhenlage zwischen dem Rotationselement (45) und der Leitung zum Transport und zur Einführung von Saatgut in den Boden (47) ermöglichen.

23. Vorrichtung zur Einführung von Saatgut in den Boden nach mindestens einem der Ansprüche 1 bis 22, dadurch gekennzeichnet, dass sie mehrere Elemente zur Einführung von Saatgut in den Boden umfasst.

24. Vorrichtung zur Einführung von Saatgut in den Boden nach Anspruch 23, dadurch gekennzeichnet, dass zumindest ein Teil der Elemente zur Einführung von Saatgut in den Boden derart angeordnet ist, dass die Rotationsachsen (52) der Rotationselemente (45) zumindest im wesentlichen zusammenfallen.

25. Vorrichtung zur Einführung von Saatgut in den Boden nach Anspruch 24, dadurch gekennzeichnet, dass zwischen jedem Paar benachbarter Gruppen (55) von Werkzeugen (54) eine Leitung zum Transport und zur Einführung von Saatgut in den Boden (47) vorgesehen ist und dass die Breite jedes Werkzeuges (54) ein wenig geringer ist als der Abstand, der die Leitungen zum Transport und zur Einführung von Saatgut in den Boden (47) von zwei benachbarten Elementen zur Einführung von Saatgut in den Boden trennt.

26. Vorrichtung zur Einführung von Saatgut in den Boden nach Anspruch 24 oder 25, dadurch gekennzeichnet, dass die Rotationselemente (45) zumindest eines Teils der verschiedenen Elemente zur Einführung von Saatgut in den Boden in einer gleichen Walze (45) zusammengefasst sind.

27. Vorrichtung zur Einführung von Saatgut in den Boden nach Anspruch 26, dadurch gekennzeichnet, dass jede Gruppe (55) von Werkzeugen (54) um die Längsachse (52) der Walze (45) in bezug auf benachbarte Gruppen (55) von Werkzeugen (54) um einen Winkel versetzt ist.

28. Vorrichtung zur Einführung von Saatgut in den Boden nach mindestens einem der Ansprüche 1 bis 27, dadurch gekennzeichnet, dass die Leitung zum Transport und zur Einführung von Saatgut in den Boden (47) zumindest in seinem Teil, der dazu bestimmt ist, während der Arbeit, in der Nähe der entsprechenden Seitenrändern der betreffenden Werkzeuge (54) zu verlaufen, zumindest im wesentlichen eine konstante Breite besitzt.

29. Sämaschine (3), die eine Vorrichtung zur Lagerung (24) des Saatgutes, eine Vorrichtung zur Dosierung des Saatgutes (25), eine Vorrichtung zur Verteilung des Saatgutes (26), eine Vorrichtung zur Einführung des Saatgutes in den Boden (27) und eine Fördervorrichtung (26) umfasst, welche das Saatgut von der dosiervorrichtung des Saatgutes (25) bis zur Vorrichtung zur Einführung des Saatgutes in den Boden (27) transportiert, dadurch gekennzeichnet, dass die genannte Vorrichtung zur Einführung von Saatgut in den Boden (27) eine Vorrichtung nach mindestens einem der Ansprüche 1 bis 28 ist.

30. Kombinierte Bodenbearbeitungs- und Saatmaschine (1), die eine Saatbettbereitungsmaschine (2) und eine Sämaschine (3) umfasst, dadurch gekennzeichnet, dass sie eine Sämaschine (3) nach Anspruch 29 verwendet.
